# DEMANDE DE BREVET EUROPEEN

(11) **EP 0 791 387 A1**
(43) Date de publication de la demande: **27.08.1997**
(21) Numéro de dépôt: 97400377.4
(22) Date de dépôt: 20.02.1997
(51) Int. Cl.: B01D 35/30, B01D 46/24

(54) **Filtre à cartouche amovible pour moteur à combustion interne**

(30) Priorité: 23.02.1996 FR 9602264
(71) Demandeur: FILTRAUTO, F-78180 Montigny le Bretonneux (FR)
(72) Inventeur: Hailly, Stéphane, 78340 Les Clayes Sous Bois (FR)
(74) Mandataire: Burbaud, Eric

(57) **Abrégé**

Il s'agit d'un filtre comprenant un réceptacle (1) qui est doté d'un couvercle amovible (6) et qui présente une entrée de fluide latérale (8) et une sortie de fluide (9) ménagée dans son fond (4), ce réceptacle contenant une cartouche filtrante qui présente des flasques d'extrémité supérieure et inférieure (16, 17) entre lesquelles s'étend une paroi latérale poreuse (12) qui délimite un intérieur creux (14). A l'intérieur du couvercle est fixé un élément presse-cartouche (22) qui comporte d'une part des pattes élastiques axiales (27) clipsées autour du flasque supérieur, et d'autre part des lames élastiques (26) appuyant sur le flasque supérieur pour appliquer le flasque inférieur contre le fond du réceptacle, en raccordant de façon étanche l'intérieur creux de la cartouche avec la sortie de fluide à travers une ouverture centrale (19) du flasque inférieur.

## Description

La présente invention concerne un filtre pour moteur à combustion interne, notamment dans un véhicule automobile, ce filtre étant destiné à filtrer un fluide qui est de préférence un liquide tel que de l'huile, du gazole ou de l'essence, mais ce fluide pouvant éventuellement être un gaz tel que l'air.

Parmi les filtres en question, l'invention concerne plus spécialement ceux qui comportent :
- un réceptacle qui présente une paroi latérale annulaire (c'est-à-dire une paroi latérale qui se referme sur elle-même, et qui, vue en section, peut présenter non seulement une forme circulaire, mais également une forme elliptique, carrée, rectangulaire, ou autre) s'étendant axialement entre d'une part une première extrémité fermée par un fond et d'autre part une deuxième extrémité fermée par un couvercle, ce réceptacle présentant en outre des premier et deuxième passages de fluide qui constituent l'un une entrée de fluide et l'autre une sortie de fluide,
- une cartouche filtrante qui présente une paroi latérale poreuse délimitant un espace intérieur creux et s'étendant axialement entre des première et des deuxième extrémités voisines l'une du fond et l'autre du couvercle, ces première et deuxième extrémités étant fixées de façon étanche respectivement à des premier et deuxième flasques d'extrémité sensiblement rigides qui sont réalisés en un matériau étanche, le premier flasque présentant une ouverture centrale qui communique avec l'espace intérieur creux de la cartouche filtrante, le deuxième flasque s'étendant au moins sur toute l'épaisseur radiale de la paroi latérale de la cartouche filtrante, jusqu'à un bord extérieur périphérique, et l'espace intérieur creux de la cartouche filtrante étant fermé de façon étanche à la deuxième extrémité de la paroi latérale de ladite cartouche filtrante,
- et un élément presse-cartouche présentant une portion élastique qui appuie axialement sur le deuxième flasque de façon à solliciter l'ensemble de la cartouche filtrante vers une position où l'ouverture centrale du premier flasque est raccordée de façon étanche au deuxième passage de fluide.

Le document EP-A-0 376 443 décrit un exemple de filtre du type défini ci-dessus.

Les filtres de ce type présentent un couvercle fixe, qui est en général serti sur la paroi latérale du réceptacle, de sorte que l'ensemble du filtre, y compris le réceptacle, doit être remplacé lorsque la cartouche filtrante est encrassée.

Par conséquent, l'entretien de ces filtres est relativement coûteux.

De plus, les filtres encrassés sont relativement difficiles à recycler, car un tel recyclage impliquerait par exemple un démontage du couvercle serti du réceptacle.

La présente invention a pour but de pallier ces inconvénients.

A cet effet, selon l'invention, un filtre du genre en question est essentiellement caractérisé en ce que le couvercle est amovible en dégageant une ouverture suffisamment large pour permettre le remplacement de la cartouche filtrante, ce couvercle étant monté sur la paroi latérale du réceptacle par des moyens de fixation permettant un montage ou un démontage rapide dudit couvercle, le deuxième passage de fluide, la première extrémité de la paroi latérale de la cartouche filtrante et le premier flasque étant situés vers le fond du réceptacle, et en ce que l'élément presse-cartouche présente un corps fixé au couvercle à l'intérieur du réceptacle, ce corps étant prolongé par au moins trois pattes réparties autour de la cartouche filtrante, qui s'étendent chacune sensiblement axialement jusqu'à une extrémité libre et qui sont déformables radialement de façon élastique, chacune de ces pattes présentant un organe de rétention qui est disposé axialement entre les deux flasques de la cartouche filtrante et qui fait saillie radialement vers l'intérieur par rapport au bord extérieur du deuxième flasque, en retenant la cartouche filtrante avec une force suffisante pour permettre l'extraction de cette cartouche filtrante hors du réceptacle lors du démontage du couvercle.

Grâce aux dispositions qui précèdent, on obtient un filtre dont seule la cartouche filtrante doit être remplacée lors de l'entretien du véhicule, et qui par ailleurs conserve les caractéristiques avantageuses des filtres de l'art antérieur du type mentionné ci-dessus.

De plus, ces dispositions permettent un gain de place entre le deuxième flasque de la cartouche filtrante et le couvercle du réceptacle : ce gain de place peut permettre soit de réaliser un réceptacle de filtre moins encombrant, à performance égale, soit d'augmenter les performances du filtre à encombrement égal du réceptacle.

Dans des modes de réalisation préférés, on a recours en outre à l'une et/ou à l'autre des dispositions suivantes:
- la portion élastique de l'élément presse-cartouche est constituée par une pluralité de lames élastiques qui sont déformées en flexion par appui sur le deuxième flasque de la cartouche filtrante lors du montage du couvercle ;
- le corps de l'élément presse-cartouche est annulaire et les lames élastiques de cet élément presse-cartouche s'étendent sensiblement radialement vers l'intérieur à partir dudit corps ;
- les organes de rétention des pattes de l'élément presse-cartouche comportent chacun des première et deuxième surfaces de came disposées face à la cartouche filtrante, la première surface de came s'étendant en biais axialement vers le couvercle et radialement vers l'intérieur à partir de l'extrémité libre de la patte correspondante jusqu'à une zone radialement intérieure dudit organe de rétention, et la deuxième surface de came s'étendant en biais axialement vers le couvercle et radialement vers l'extérieur, à partir de ladite portion radialement intérieure, de sorte que la cartouche filtrante peut être montée ou démontée du couvercle par clipsage ;
- le deuxième flasque présente une ouverture centrale et l'élément presse-cartouche comporte une partie annulaire pleine qui est sollicitée vers le deuxième flasque par la portion élastique dudit élément presse-cartouche et qui présente une portée annulaire radialement extérieure et une portée annulaire radialement intérieure, la portée annulaire radialement extérieure étant en appui étanche contre le deuxième flasque autour de l'ouverture centrale de ce deuxième flasque, l'élément presse-cartouche comportant en outre un organe de support qui est fixé à la partie centrale annulaire de cet élément presse-cartouche et qui s'étend dans l'espace intérieur creux de la cartouche filtrante, cet organe de support portant un ressort qui sollicite un organe de clapet contre la portée annulaire radialement intérieure sus-mentionnée, en direction du couvercle ;
- le couvercle présente des tétons qui traversent des orifices ménagés dans le corps de l'élément presse-cartouche, ces tétons étant rivetés sur le corps de l'élément presse-cartouche pour fixer l'élément presse-cartouche au couvercle ;
- le bord extérieur périphérique du deuxième flasque fait saillie radialement à l'extérieur de la paroi latérale de la cartouche filtrante, ce bord extérieur périphérique étant assemblé sensiblement sans jeu entre les pattes de l'élément presse-cartouche, et les organes de rétention de ces pattes n'appuyant pas sur la paroi latérale de la cartouche filtrante ;
- le bord extérieur périphérique du deuxième flasque est rabattu axialement.

D'autres caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue en coupe axiale d'un filtre selon une première forme de réalisation de l'invention,
- la figure 2 est une vue en perspective de l'élément presse-cartouche du filtre de la figure 1,
- la figure 3 est une vue en coupe axiale d'un filtre selon une deuxième forme de réalisation de l'invention,
- et la figure 4 est une vue en perspective de l'élément presse-cartouche du filtre de la figure 3.

Sur les différentes figures, les mêmes références désignent des éléments identiques ou similaires.

Par ailleurs, pour faciliter la compréhension de la description qui suit, le filtre sera décrit dans sa position la plus usuelle, c'est-à-dire la position verticale, le couvercle étant dirigé vers le haut.

Mais cette position n'est pas limitative, et le filtre pourrait éventuellement être utilisé dans une autre position.

Par conséquent, les termes tels que "haut", "bas", "supérieur", "inférieur", "vertical", "horizontal" ne sont donnés qu'à titre illustratif.

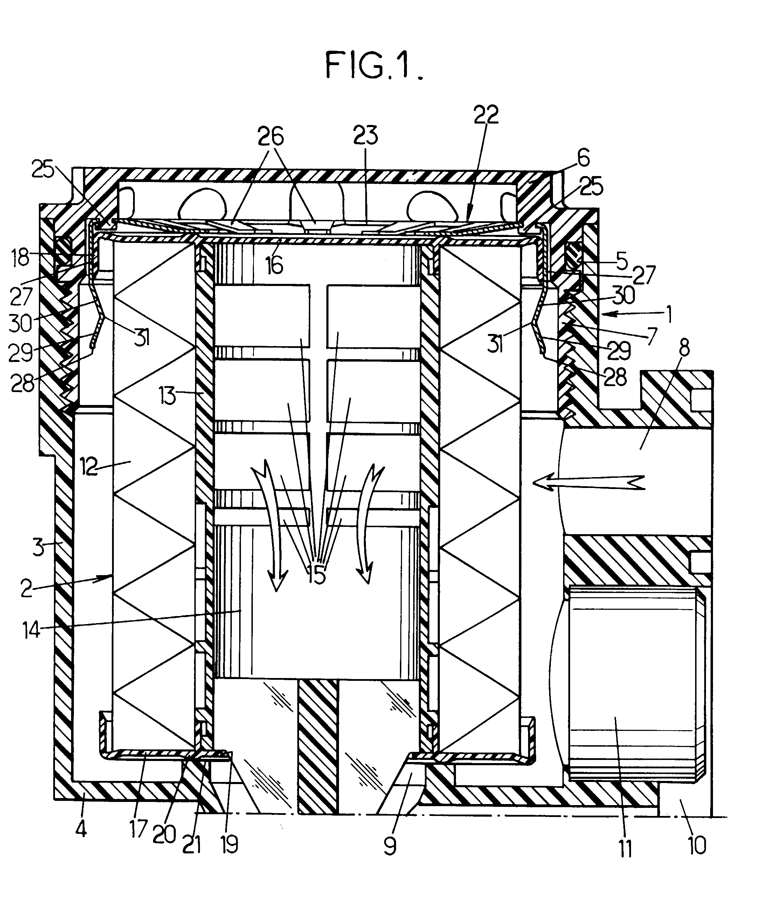

Le filtre représenté sur la figure 1 est un filtre à huile, bien que l'invention soit également applicable à un filtre à gazole, un filtre à essence, ou un filtre pour tout autre liquide dans un moteur à combustion interne, ou même à un filtre à air.

Ce filtre se compose d'un réceptacle 1 qui reçoit une cartouche filtrante 2.

L'ensemble du réceptacle 1 peut être réalisé par exemple en matière plastique, ou éventuellement en métal, ou en tout autre matériau.

Ce réceptacle 1 comporte une paroi latérale 3, qui dans l'exemple représenté présente une forme cylindrique de révolution s'étendant selon un axe vertical entre d'une part une extrémité inférieure fermée par un fond fixe 4, et d'autre part une extrémité supérieure qui délimite une ouverture 5 suffisamment large pour permettre le remplacement de la cartouche filtrante 2.

Le réceptacle 1 comporte en outre un couvercle 6 amovible qui obture de façon étanche l'ouverture 5.

Dans l'exemple représenté sur la figure 1, le couvercle 6 est vissé à l'extrémité supérieure de la paroi latérale 3, par l'intermédiaire d'un filetage 7.

Toutefois, ce couvercle pourrait être fixé à la paroi latérale 3 par tout autre moyen permettant un montage ou un démontage rapide dudit couvercle, par exemple un montage à baïonnette, ou encore un montage par l'intermédiaire d'une bague recouvrant partiellement le couvercle 6 et elle-même vissée ou fixée par un montage à baïonnette à la paroi latérale 3.

Par ailleurs, le réceptacle 1 comporte une entrée d'huile 8 qui est ménagée dans la paroi latérale 3, et une sortie d'huile 9 qui est ménagée dans le fond 4 et qui communique avec un conduit de sortie 10.

De plus, une soupape de sécurité 11 (non coupée), connue en soi, est montée pour faire communiquer directement l'entrée d'huile 8 avec le conduit de sortie 10 lorsque la différence de pression entre l'entrée et la sortie d'huile dépasse une valeur prédéterminée.

La cartouche filtrante 2, quant à elle, présente également, dans l'exemple représenté, une forme cylindrique de révolution d'axe vertical.

Cette cartouche filtrante comporte une paroi latérale filtrante 12 qui est réalisée par exemple en papier filtre plissé et qui est disposée autour d'une ossature rigide 13.

L'ossature 13 est elle-même cylindrique et délimite un espace intérieur creux 14 qui communique avec le papier filtre de la partie latérale 12 par l'intermédiaire d'ouvertures 15 ménagées dans l'ossature 13.

Par ailleurs, la cartouche filtrante 2 comporte à ses extrémités axiales deux flasques d'extrémité, savoir un flasque supérieur 16 et un flasque inférieur 17, qui sont réalisés en un matériau étanche et sensiblement rigide tel qu'un métal, une matière plastique, un élastomère, une feutrine imprégnée d'une résine, etc...

Ces flasques sont emboîtés serrés aux extrémités de l'ossature 13, et sont reliés de façon étanche aux extrémités axiales de la paroi latérale 12, notamment au moyen d'un encollage desdites extrémités axiales de la paroi latérale 12.

Le flasque supérieur 16 présente sensiblement la forme d'un disque plein, de sorte qu'il obture l'espace intérieur 14 à l'extrémité supérieure de la cartouche filtrante, et il s'étend radialement en débordant légèrement à l'extérieur de la paroi latérale 12, en formant un bord extérieur rabattu 18.

Le flasque inférieur 17, quant à lui, présente d'une part une ouverture centrale 19 qui fait communiquer l'espace intérieur 14 de la cartouche filtrante avec la sortie d'huile 9, et d'autre part une partie annulaire inférieure 20 en forme de jonc, qui est disposée autour de l'ouverture centrale 19.

Le jonc 20 est appliqué avec étanchéité contre une portée annulaire 21 qui est ménagée dans le fond 4 du réceptacle autour de la sortie d'huile 9, sous la sollicitation élastique d'un élément presse-cartouche 22 qui appuie sur le flasque supérieur 16.

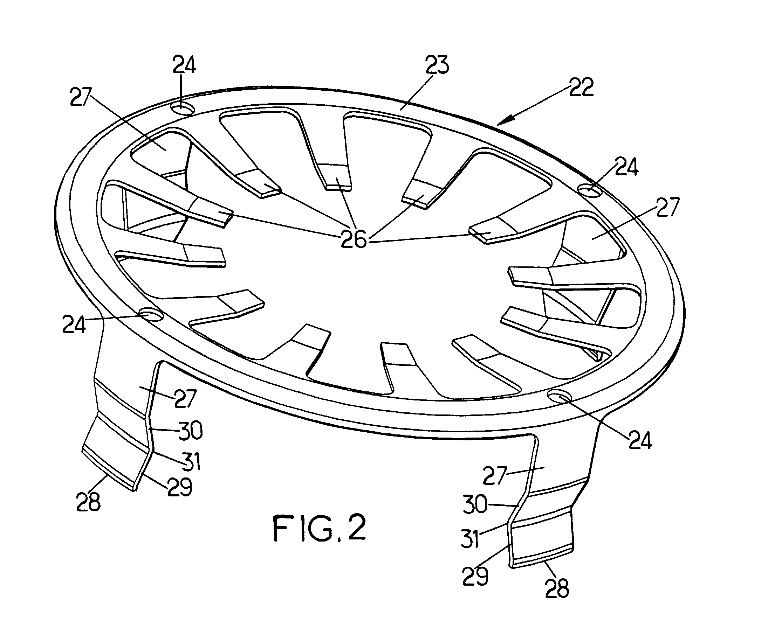

Cet élément presse-cartouche 22, qui est représenté plus en détail sur la figure 2, est une pièce élastique qui peut être réalisée par exemple dans une tôle d'acier découpée et pliée. toutefois, l'élément presse-cartouche pourrait être réalisé en un autre matériau, par exemple en matière plastique moulée.

L'élément presse-cartouche 22 présente un corps annulaire 23 qui est fixé au couvercle 6.

Dans l'exemple représenté, pour sa fixation au couvercle 6, le corps 23 présente des orifices 24 qui reçoivent des tétons 25 du couvercle 6, le corps 23 étant riveté au couvercle 6 par écrasement à chaud des tétons 25 contre la face inférieure du corps 23 (voir figure 1).

En variante, le couvercle 6 pourrait être en métal, notamment en aluminium, et les tétons 25 pourraient alors être rivetés par écrasement mécanique.

Le corps annulaire 23 de l'élément presse-cartouche se prolonge radialement vers l'intérieur par des lames élastiques 26 qui s'étendent en biais vers le bas et qui sont déformables élastiquement en flexion par appui sur le flasque supérieur 16 de la cartouche.

Par ailleurs, le bord extérieur du corps annulaire 23 se prolonge axialement vers le bas par quatre pattes élastiques 27, ou dans le cas général au moins trois pattes 27, qui sont déformables élastiquement en direction radiale et qui sont réparties autour de l'élément presse-cartouche 22.

Chacune des pattes 27 présente, au voisinage de son extrémité libre 28, une pliure dirigée radialement vers l'intérieur.

Ainsi, chaque patte 27 présente deux surfaces de came 29, 30 qui font face à la paroi latérale 12 de la cartouche 2, savoir :
- une surface de came inférieure 29 qui s'étend depuis l'extrémité libre 28 de la patte 27 considérée, en biais vers le haut et vers l'intérieur, jusqu'à une zone radialement intérieure 31,
- et une surface de came supérieure 30, qui s'étend en biais vers le haut et vers l'extérieur depuis la zone radialement intérieure 31 jusqu'à la portion supérieure de la patte 27 considérée.

Grâce à ces dispositions, avant montage de la cartouche filtrante 2 dans le filtre, il est possible de fixer cette cartouche filtrante à l'intérieur du couvercle 6 par simple emboîtement axial de l'extrémité supérieure de cette cartouche filtrante entre les pattes élastiques 27 de l'élément presse-cartouche.

Au cours de ce mouvement, les pattes élastiques 27 se déforment d'abord radialement vers l'extérieur par appui du bord extérieur 18 du flasque supérieur contre les surfaces de came inférieures 29 desdites pattes élastiques, puis les pattes élastiques 27 se clipsent autour du bord extérieur 18, la zone radialement intérieure 31 desdites pattes élastiques étant alors située sous le bord extérieur 18 (voir figure 1) et faisant saillie radialement vers l'intérieur par rapport audit bord 18.

De préférence, les pattes élastiques 27 sont clipsées sensiblement sans jeu autour du bord extérieur 18 ou éventuellement sur des reliefs formés à l'extérieur de ce bord, et la zone radialement intérieure 31 de chaque patte 27 n'est pas en contact avec la paroi latérale 12 de la cartouche filtrante, de façon à ne pas risquer de blesser le papier filtre qui constitue cette paroi.

La cartouche filtrante 2 peut alors être montée à l'intérieur du filtre par vissage du couvercle 6.

Lors du remplacement de la cartouche filtrante 2, on dévisse le couvercle 6 et on sort la cartouche 2 du réceptacle 1 par simple traction sur le couvercle 6, la force élastique des pattes 27 étant suffisante pour retenir la cartouche 2.

On sépare ensuite la cartouche 2 usagée du couvercle 6 par une traction suffisamment forte sur cette cartouche 2 ou en inclinant le couvercle 6 par rapport à la cartouche 2 (au cours de ce mouvement, les pattes 27 se déforment radialement vers l'extérieur par appui du bord extérieur 18 du flasque supérieur contre les surfaces de came supérieures 30 desdites pattes), puis on replace une nouvelle cartouche 2 sous le couvercle 6 et remonte le couvercle sur le filtre.

Grâce à ces dispositions, le remplacement de la cartouche filtrante 2 est aisé, l'utilisateur évite de se salir les mains en allant rechercher une cartouche filtrante à l'intérieur du réceptacle 1, et lorsqu'il replace une nouvelle cartouche filtrante dans le filtre, le positionnement correct de cette cartouche est garanti grâce à la fixation de ladite cartouche sous le couvercle 6.

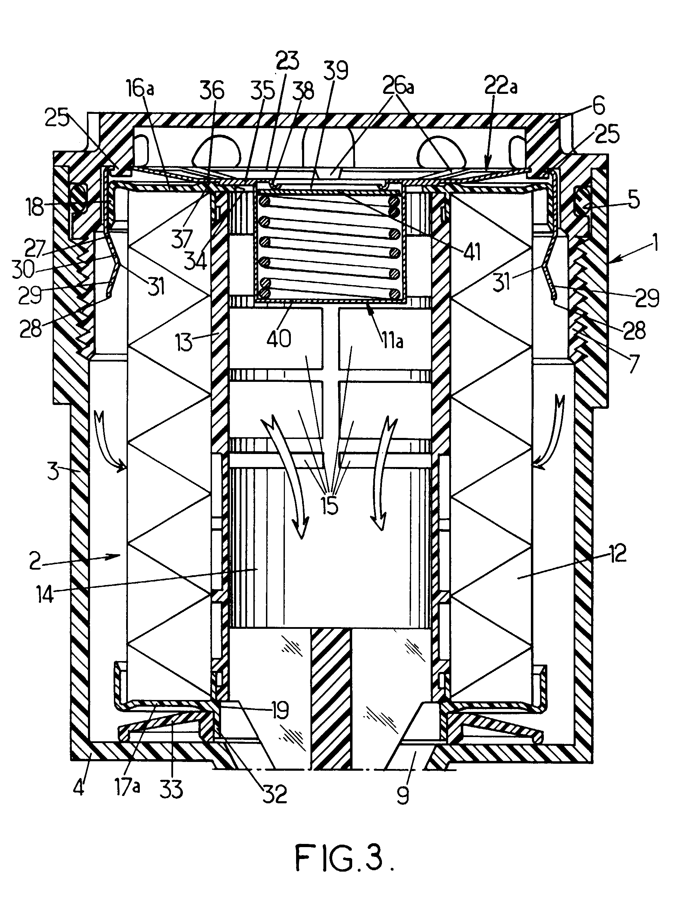

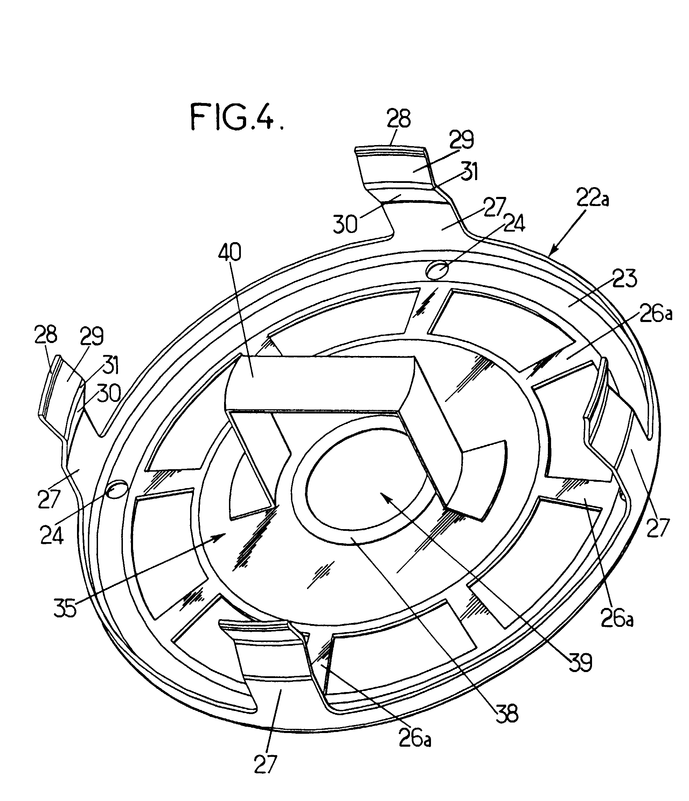

Le filtre représenté sur les figures 3 et 4 est similaire au filtre déjà décrit, de sorte qu'il ne sera pas décrit en détail ici.

Ce filtre se distingue uniquement du filtre des figures 1 et 2 par les points suivants :
- le flasque inférieur 17a de la cartouche filtrante se prolonge axialement vers le bas par une virole 32 autour de laquelle est emboîté un joint annulaire 33 en caoutchouc en appui étanche contre le fond 6 du réceptacle, la portée 21 saillante de ce fond 6 étant supprimée par rapport à la forme de réalisation des figures 1 et 2,
- le flasque supérieur 16a de la cartouche filtrante présente une ouverture centrale 34 qui présente un diamètre intérieur légèrement inférieur au diamètre intérieur de l'ossature 13 de la cartouche filtrante,
- les lames élastiques 26a de l'élément presse-cartouche 22a se prolongent radialement vers l'intérieur par une partie annulaire pleine 35 qui présente une portée annulaire radialement extérieure 36 en appui étanche contre un jonc annulaire supérieur 37 du flasque supérieur 16a, la partie annulaire pleine 35 présentant également une portée annulaire 38 radialement intérieure qui délimite une ouverture centrale 39,
- et la soupape 11a n'est pas montée dans la paroi latérale du réceptacle, mais cette soupape est située dans l'espace intérieur creux 14 de la cartouche filtrante, ladite soupape 11a étant montée sous la partie annulaire pleine 35 de l'élément presse-cartouche au moyen d'un pontet 40 qui présente une forme sensiblement en forme de U et qui est fixé sous la partie annulaire pleine 35 : la soupape 11a comporte un organe de clapet 41 qui est sollicité vers le haut par un ressort métallique hélicoïdal 42 porté par le pontet 40, de façon que ledit organe de clapet soit appliqué en contact étanche contre la portée radialement intérieure 38.

Par ailleurs, l'entrée d'huile du réceptacle 1 (non représentée) est identique à l'entrée d'huile de la figure 8.

On notera que dans la forme de réalisation des figure 3 et 4, le clipsage de la cartouche 2 sur le couvercle 6 garantit un bon positionnement relatif entre la partie annulaire pleine 35 de l'élément presse-cartouche et l'ouverture centrale 34 du flasque supérieur 16a.

## Revendications

1. Filtre à fluide pour moteur de véhicule automobile, comportant :
- un réceptacle (1) qui présente une paroi latérale annulaire (3) s'étendant axialement entre d'une part une première extrémité fermée par un fond (4) et d'autre part une deuxième extrémité fermée par un couvercle (6), ce réceptacle présentant en outre des premier et deuxième passages (8,9) de fluide qui constituent l'un une entrée de fluide et l'autre une sortie de fluide,
- une cartouche filtrante (2) qui présente une paroi latérale poreuse (12) délimitant un espace intérieur creux (14) et s'étendant axialement entre des première et des deuxième extrémités voisines l'une du fond (4) et l'autre du couvercle (6), ces première et deuxième extrémités étant fixées de façon étanche respectivement à des premier et deuxième flasques d'extrémité sensiblement rigides (16, 17 ; 16a, 17a) qui sont réalisés en un matériau étanche, le premier flasque (17 ; 17a) présentant une ouverture centrale (19) qui communique avec l'espace intérieur creux (14) de la cartouche filtrante, le deuxième flasque (16 ; 16a) s'étendant au moins sur toute l'épaisseur radiale de la paroi latérale de la cartouche filtrante, jusqu'à un bord extérieur périphérique (18), et l'espace intérieur creux (14) de la cartouche filtrante étant fermé de façon étanche à la deuxième extrémité de la paroi latérale de ladite cartouche filtrante,
- et un élément presse-cartouche (22 ; 22a) présentant une portion élastique (26 ; 26a) qui appuie axialement sur le deuxième flasque (16 ; 16a) de façon à solliciter l'ensemble de la cartouche filtrante vers une position où l'ouverture centrale (19) du premier flasque est raccordée de façon étanche au deuxième passage de fluide (9),
**caractérisé en ce que** le couvercle (6) est amovible en dégageant une ouverture (5) suffisamment large pour permettre le remplacement de la cartouche filtrante (2), ce couvercle étant monté sur la paroi latérale (3) du réceptacle par des moyens de fixation (7) permettant un montage ou un démontage rapide dudit couvercle, le deuxième passage de fluide (9), la première extrémité de la paroi latérale de la cartouche filtrante et le premier flasque (17 ; 17a) étant situés vers le fond (4) du réceptacle,
**et en ce que** l'élément presse-cartouche (22 ; 22a) présente un corps (23) fixé au couvercle (6) à l'intérieur du réceptacle, ce corps (23) étant prolongé par au moins trois pattes (27) réparties autour de la cartouche filtrante, qui s'étendent chacune sensiblement axialement jusqu'à une extrémité libre (28) et qui sont déformables radialement de façon élastique, chacune de ces pattes présentant un organe de rétention (29, 30, 31) qui est disposé axialement entre les deux flasques (16, 17 ; 16a, 17a) de la cartouche filtrante et qui fait saillie radialement vers l'intérieur par rapport au bord extérieur (18) du deuxième flasque, en retenant la cartouche filtrante (2) avec une force suffisante pour permettre l'extraction de cette cartouche filtrante hors du réceptacle (1) lors du démontage du couvercle (6).

2. Filtre selon la revendication 1, dans lequel la portion élastique de l'élément presse-cartouche (22, 22a) est constituée par une pluralité de lames élastiques (26 ; 26a) qui sont déformées en flexion par appui sur le deuxième flasque (16 ; 16a) de la cartouche filtrante lors du montage du couvercle (6).

3. Filtre selon la revendication 2, dans lequel le corps (23) de l'élément presse-cartouche est annulaire et les lames élastiques (26 ; 26a) de cet élément presse-cartouche s'étendent sensiblement radialement vers l'intérieur à partir dudit corps.

4. Filtre selon l'une quelconque des revendications précédentes, dans lequel les organes de rétention des pattes (27) de l'élément presse-cartouche comportent chacun des première et deuxième surfaces de came (29,30) disposées face à la cartouche filtrante, la première surface de came (29) s'étendant en biais axialement vers le couvercle (6) et radialement vers l'intérieur à partir de l'extrémité libre (28) de la patte correspondante jusqu'à une zone radialement intérieure (31) dudit organe de rétention, et la deuxième surface de came (30) s'étendant en biais axialement vers le couvercle (6) et radialement vers l'extérieur, à partir de ladite portion radialement intérieure (31), de sorte que la cartouche filtrante peut être montée ou démontée du couvercle par clipsage.

5. Filtre selon l'une quelconque des revendications précédentes, dans lequel le deuxième flasque (16a) présente une ouverture centrale (34) et l'élément presse-cartouche (22a) comporte une partie annulaire pleine (35) qui est sollicitée vers le deuxième flasque par la portion élastique (26a) dudit élément presse-cartouche et qui présente une portée annulaire radialement extérieure (36) et une portée annulaire radialement intérieure (38), la portée annulaire radialement extérieure (36) étant en appui étanche contre le deuxième flasque (16a) autour de l'ouverture centrale de ce deuxième flasque, l'élément presse-cartouche comportant en outre un organe de support (40) qui est fixé à la partie centrale annulaire (35) de cet élément presse-cartouche et qui s'étend dans l'espace intérieur creux (14) de la cartouche filtrante, cet organe de support portant un ressort (42) qui sollicite un organe de clapet (41) contre la portée annulaire radialement intérieure (38) sus-mentionnée, en direction du couvercle (6).

6. Filtre selon l'une quelconque des revendications précédentes, dans lequel le couvercle présente des tétons (25) qui traversent des orifices (24) ménagés dans le corps (23) de l'élément presse-cartouche (22 ; 22a), ces tétons étant rivetés sur le corps dudit élément presse-cartouche pour fixer l'élément presse-cartouche au couvercle (6).

7. Filtre selon l'une quelconque des revendications précédentes, dans lequel le bord extérieur périphérique (18) du deuxième flasque (16, 16a) fait saillie radialement à l'extérieur de la paroi latérale (12) de la cartouche filtrante, ce bord extérieur périphérique étant assemblé sensiblement sans jeu entre les pattes (27) de l'élément presse-cartouche, et les organes de rétention (29, 30, 31) de ces pattes n'appuyant pas sur la paroi latérale (12) de la cartouche filtrante.

8. Filtre selon la revendication 7, dans lequel le bord extérieur périphérique (18) du deuxième flasque est rabattu axialement.
